# FASCICULE DE BREVET EUROPEEN

(11) **EP 0 658 946 B1**
(45) Date de publication et mention de la délivrance du brevet: **12.03.1997**
(21) Numéro de dépôt: 94402882.8
(22) Date de dépôt: 14.12.1994
(51) Int. Cl.: H01M 2/26, H01M 10/28

(54) **Plaque d'électrode à support de type mousse métallique pour générateur électrochimique et procédé pour fabriquer une telle plaque d'électrode**
Elektrodeplatte mit schaumförmigem Träger für elektrochemische Generatoren und Verfahren zur ihrer Herstellung
Electrode plate with spongiform metallic support for electrochemical generator and process for manufacturing such an electrode plate

(30) Priorité: 17.12.1993 FR 9315253
(43) Date de publication de la demande: 21.06.1995
(73) Titulaire: SAFT, F-93230 Romainville (FR)
(72) Inventeur: Verhoog, Roelof, F-33200 Bordeaux (FR); Stewart, Donald, F-33000 Bordeaux (FR)
(74) Mandataire: Laroche, Danièle

(56) Documents cités:
- EP-A- 0 418 774
- PATENT ABSTRACTS OF JAPAN vol. 11 no. 367 (E-561) [2814] ,28 Novembre 1987 & JP-A-62 139251 (MATSUSHITA ELECTRIC IND CO LTD) 22 Juin 1987,
- PATENT ABSTRACTS OF JAPAN vol. 11 no. 363 (E-560) [2810] ,26 Novembre 1987 & JP-A-62 136759 (MATSUSHITA ELECTRIC IND CO LTD) 19 Juin 1987,

## Description

La présente invention concerne une plaque d'électrode à support de type mousse métallique pour générateur électrochimique et un procédé pour fabriquer une telle plaque d'électrode.

L'invention se rapporte en particulier aux générateurs électrochimiques à électrolyte alcalin dont au moins une électrode comporte un support poreux métallique, par exemple en nickel, chargé de matière active, par exemple à base d'hydroxyde de nickel.

Un tel support poreux présente une structure matricielle comparable à une éponge dont les cellules sont reliées les unes aux autres dans un réseau tridimensionnel et il est désigné par le terme de "mousse".

Avant chargement par la matière active, la porosité de la mousse du support est supérieure à 90%. L'épaisseur e₁ de la mousse utilisée, dans son état initial est généralement comprise, selon les applications, entre 0,5 mm et 5 mm. Après chargement, le support est réduit en épaisseur, par compression ou laminage, à une épaisseur e₂ pour un bon fonctionnement électrochimique. Au maximum, cette réduction divise par deux l'épaisseur initiale du support.

La liaison d'une plaque d'électrode de ce type à une borne du générateur se fait par la tête de plaque qui comprend une zone de connexion de l'électrode. La zone de connexion est ensuite liée à ladite borne par des moyens divers : vissage, soudure.

La confection de la zone de connexion d'une électrode à support de type mousse pose des problèmes : cette zone doit en effet être suffisamment résistante mécaniquement, avoir une bonne conduction électrique, ne pas alourdir la plaque et être de confection simple et économique.

Différentes solutions existent pour réaliser cette zone de connexion. Il s'agit par exemple d'un rivetage, d'un agrafage ou du soudage d'une pièce métallique sur la mousse du support ; de la compression d'une languette en mousse de même nature, non chargée, sur la mousse du support préalablement chargée de matière active, avec une queue dépassante, voir par exemple le document EP-A-0 418 774. Cette solution est fragile et n'assure pas une excellente conduction électrique à la tête de plaque. En outre, ces solutions ne donnent pas entièrement satisfaction et sont onéreuses.

La présente invention a pour but de proposer une plaque d'électrode assurant une bonne conduction électrique à la tête de plaque et à sa zone de connexion, ainsi qu'une bonne résistance mécanique à la tête de plaque et à sa zone de connexion. L'invention propose aussi un procédé simple et économique pour fabriquer de telles électrodes.

L'invention a ainsi pour objet une plaque d'électrode à support de type mousse métallique pour générateur électrochimique, comportant une partie active empâtée de matière active et une tête de plaque comportant une queue de connexion, caractérisée en ce que ladite tête de plaque est constituée par la mousse métallique elle-même dudit support, sans adjonction de bandes de mousse métallique supplémentaires, ni de pièces supplémentaires, la densité, par unité de surface de la mousse métallique dans ladite tête de plaque étant au moins 2,5 fois celle du reste de la plaque d'électrode, la densité supérieure de la tête de plaque provenant d'une opération de compression de la mousse du support, ladite queue de ladite tête de plaque émergeant du milieu de l'épaisseur de ladite plaque et provenant d'une compression dudit support dans deux directions, une première compression dans le plan de l'électrode dans le sens de sa hauteur et une deuxième compression perpendiculaire au plan de l'électrode dans le sens de son épaisseur.

Selon une réalisation particulière, la partie de la tête de plaque, en dehors de ladite queue de connexion a une porosité la plus proche possible de 0% provenant d'un écrasement maximal de la mousse de départ du support dans le sens de la hauteur de l'électrode.

Selon une autre caractéristique, l'extrémité supérieure libre de ladite queue de connexion comporte un élargissement en épaisseur par rapport au reste de ladite queue.

L'invention a aussi pour objet un procédé pour la réalisation d'une plaque d'électrode telle que ci-dessus, caractérisé par le fait que l'on part d'une plaque dudit support ayant une longueur L, une hauteur H et une épaisseur e₁, puis :
a - on charge ledit support de matière active depuis le bas jusqu'à une hauteur H-G;
b - on comprime la partie non chargée, constituant une bande de hauteur initiale G, dans la direction de la hauteur, c'est-à-dire dans le plan du support ;
c - on comprime la totalité du support dans la direction de son épaisseur e₁, cette compression étant incomplète dans la partie chargée de matière active pour l'amener à une épaisseur e₂, nécessaire au bon fonctionnement électrochimique et maximale dans au moins la majeure partie de la hauteur restante de ladite bande, à partir de la partie chargée, avec néanmoins une portion transitoire entre ladite partie chargée, incomplètement comprimée, et ladite compression maximale d'au moins la majeure partie de la hauteur restante de ladite bande.

Selon une variante du procédé, on commence, avant tout empâtage
a - à comprimer dans la direction de la hauteur, c'est-à-dire dans le plan du support, une bande de hauteur initiale G dudit support,
b - à comprimer, dans la direction de son épaisseur, et au maximum, au moins la majeure partie de la hauteur restante de la bande comprimée sous l'opération précédente a, à partir de la partie non comprimée et avec une portion transitoire entre ladite partie non comprimée et ladite compression maximale de la majeure partie de la hauteur de ladite bande,
c - à charger ledit support de matière active dans toute sa partie non comprimée ainsi que dans ladite portion transitoire,
d - à comprimer partiellement toute la partie du support chargée de matière active sous l'opération c, pour le bon fonctionnement électrochimique.

Selon une première réalisation avantageuse du procédé et s'appliquant eux deux cas précédents, -c'est-à-dire aussi bien dans le cas où le support est chargé de matière active avant toute opération de compression que dans l'autre cas où le chargement en matière active n'est faite qu'après la compression dans la direction de l'épaisseur de la tête de plaque- ladite compression, dans la direction de la hauteur de ladite bande de hauteur initiale G est maximale sur une partie x de la longueur L du support et partielle sur la partie restante L-x, cette partie restante formant une queue constituant ladite zone de connexion.

Selon une autre réalisation, applicable également aux deux variantes du procédé, ladite compression dans la direction de la hauteur de ladite bande de hauteur initiale G est une compression partielle sur toute la longueur L du support.

Ensuite, après que cette bande a été comprimée au maximum, dans la direction de son épaisseur, on en coupe une partie, de manière à ne laisser subsister qu'une languette constituant la queue de connexion.

La compression de cette bande dans la direction de l'épaisseur est faite de part et d'autre dudit support initial de façon à ce que la queue de connexion émerge du centre de l'épaisseur de la plaque d'électrode, ce qui évite, lors de l'assemblage des plaques, les courts-circuits avec les plaques alternées de polarité opposée.

D'autres avantages et caractéristiques de la présente invention ressortiront de la description d'exemples de mise en oeuvre de l'invention donnés ci-après en référence au dessin annexé dans lequel :

Les figures 1A à 1D montrent les différentes étapes d'une première variante du procédé aboutissant à une plaque d'électrode (figure 1D) selon l'invention.

La figure 2 est une vue schématique du moyen utilisé pour effectuer la compression du support dans son plan dans la direction de la hauteur de la plaque d'électrode.

Les figures 3A à 3E montrent les différentes étapes d'une deuxième variante du procédé aboutissant à une plaque d'électrode (figure 3E) selon l'invention.

Les figures 4A et 4B montrent une autre variante dans laquelle la partie de la tête de plaque, en dehors de la queue de connexion, est effectuée par une compression dans le sens de la hauteur, puis une compression dans le sens de l'épaisseur suivie d'une découpe.

La figure 5 montre une électrode selon l'invention dont l'extrémité libre de la queue comporte un élargissement.

La figure 6 montre un assemblage de plaques d'électrodes positives et négatives conformes à la figure 5, reliées à des bornes positives et négatives portant des dents.

Les figures 7A et 7B montrent un procédé d'assemblage de plusieurs plaques d'électrodes positives et négatives conformes à la figure 5 assemblées respectivement par l'écrasement de la partie élargie de leur queue.

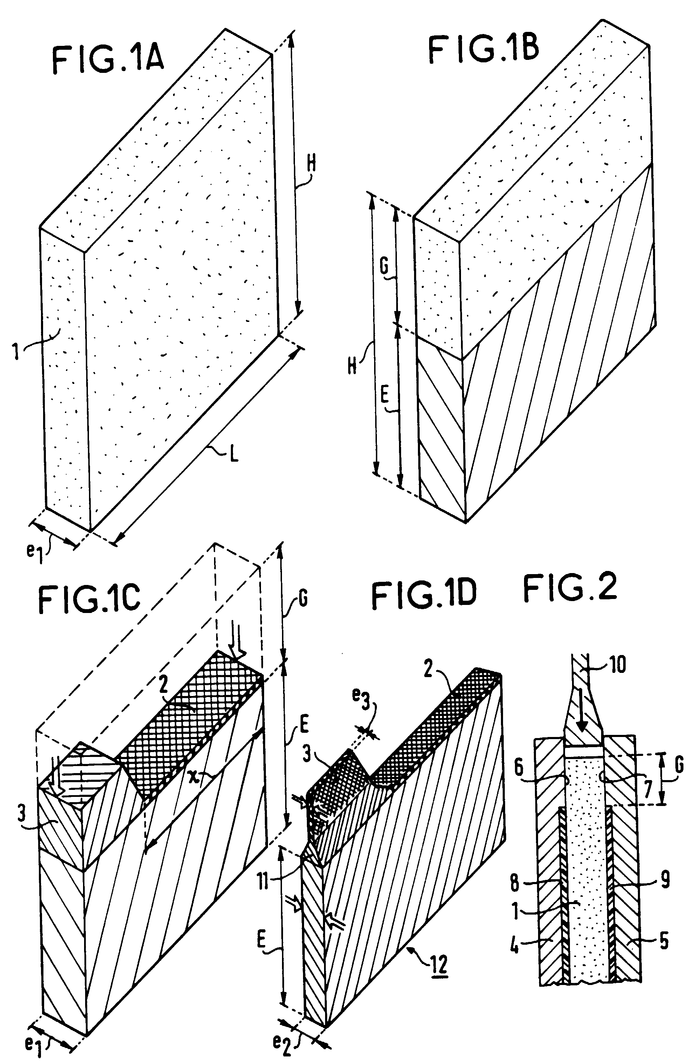

En se référant aux figures 1A à 1D, on va décrire les étapes d'un premier procédé pour aboutir à une plaque d'électrode selon l'invention. On commence par prendre une plaque support 1 en mousse métallique, par exemple en nickel, à 95% de porosité et d'une densité par unité de surface égale à d₁. Sa longueur est L, sa hauteur H et son épaisseur e₁.

Il est bien entendu que dans tout le texte qui suit, on se réfère en exemple à la fabrication d'une plaque d'électrode d'une longueur L, cependant il est bien clair que les procédés décrits s'appliquent de façon identique en partant d'une bande de grande longueur utilisée pour la fabrication en continu d'une pluralité de plaques de longueur L qui sont ensuite découpées à cette longueur une fois que toutes les étapes constituant le procédé de fabrication sont effectuées.

On empâte ensuite cette plaque 1 (figure 1B) avec de la matière active sur une hauteur E avec une garde de hauteur G non empâtée.

Ensuite, figure 1C, la bande non empâtée de hauteur initiale G est comprimée dans le plan de la plaque support 1 dans la direction de sa hauteur H. Sur une longueur x de la plaque, cette bande de hauteur G est comprimée au maximum, de telle sorte que la porosité de la mousse métallique de la hauteur restante de la bande G, une fois comprimée et référencée 2 dans son état comprimé, est proche de 0% et sa densité plus de quatre fois celle de la mousse initiale. En revanche, sur le reste de la longueur L-x de la plaque, la compression est telle que la densité, par unité de surface de la mousse comprimée est environ 2,5 fois celle de la mousse initiale. On aboutit ainsi à une queue 3.

La figure 2 représente schématiquement un petit appareillage permettant d'effectuer cette compression dans le plan de la plaque : on utilise deux plateaux 4 et 5 dont les surfaces en vis à vis 6 et 7, sur une hauteur au moins égale à G, ont un coefficient de frottement le plus faible possible, puis ensuite, sur le reste de la hauteur, les surfaces en vis à vis 8 et 9 ont au contraire un fort coefficient de frottement. La plaque support 1 est serrée entre ces deux plateaux, de telle sorte qu'elle dépasse d'une hauteur G l'extrémité supérieure des surfaces 8 et 9 à fort coefficient de frottement. Ce dispositif permet, lors de la compression par un outil 10 de ne comprimer que la partie de hauteur G de la plaque support 1 et d'une manière à peu près homogène dans sa hauteur.

Après cette opération de compression dans le sens de la hauteur H figurée figure 1C, on effectue, figure 1D, une compression dans le sens de l'épaisseur de la plaque.

Cette compression est partielle sur la partie empâtée de hauteur E de la plaque. Elle a pour but d'assurer un bon fonctionnement électrochimique de la plaque. Cette compression divise l'épaisseur initiale e₁ de la plaque au maximum par deux. On arrive ainsi à une épaisseur finale e₂. Cette épaisseur finale e₂ est par exemple de 1 mm si l'épaisseur initiale e₁ est de 1,8 mm.

En revanche, la queue 3 est comprimée au maximum, à partir des deux faces de la plaque 1, de telle sorte que sa porosité soit la plus faible possible. Cette queue émerge du milieu de l'épaisseur e₂ de la plaque. Bien entendu, il existe une portion transitoire 11 dans la queue 3, où l'épaisseur décroît depuis l'épaisseur e₂ jusqu'à celle e₃ écrasée au maximum. Cette épaisseur e₃ est par exemple de 0,2 mm.

On aboutit ainsi, figure 1D, à une plaque d'électrode 12 comportant une partie active, empâtée de manière active sur une hauteur E et comportant une tête de plaque 2, 3, 11. Cette tête de plaque est intégralement formée à partir de la plaque support 1 de départ sans aucune adjonction, ni de mousse métallique supplémentaire, ni autre pièce métallique. La tête de plaque, dans sa partie 2 de forte densité, environ cinq fois la mousse de départ, joue le rôle de collecteur de courant et la queue 3 d'une densité égale à environ trois fois la mousse de départ assure également une bonne conduction de courant et une bonne résistance mécanique.

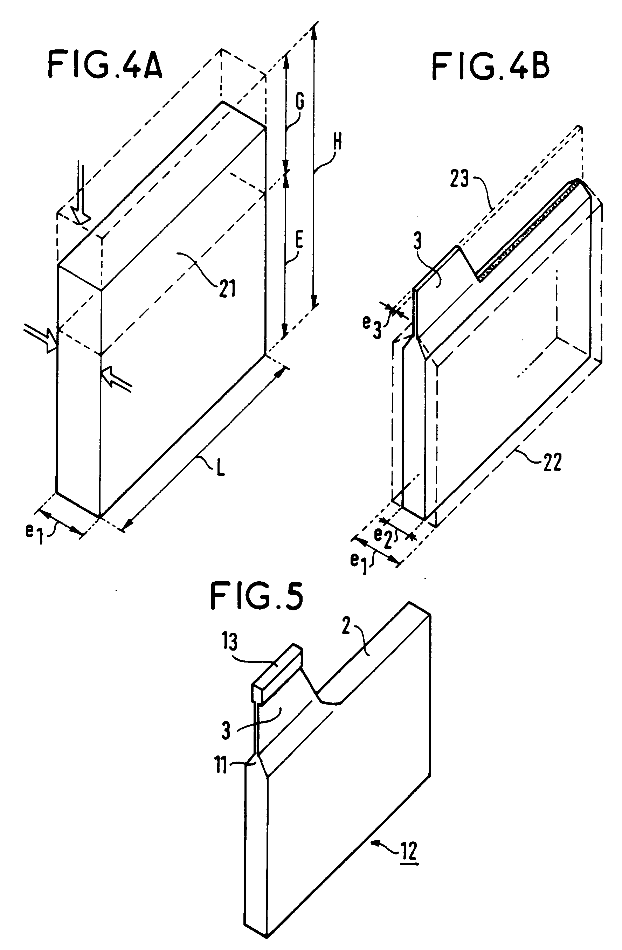

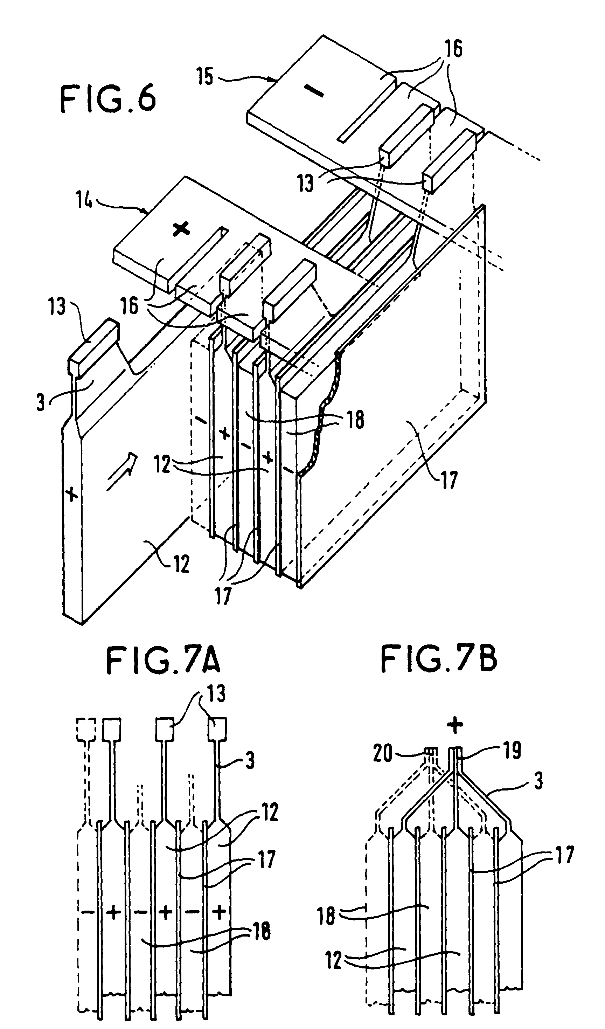

Lors de la compression de la queue 3 dans le sens de l'épaisseur, on peut éviter de comprimer au maximum l'extrémité supérieure libre de la queue, de façon à obtenir un élargissement 13, comme on le voit dans la figure 5. Cet élargissement permet un assemblage sur des bornes à dents, comme on le voit sur la figure 6.

Sur cette figure, on voit un pied de borne positive 14 et un pied de borne négative 15. Ces pieds de bornes portent des dents 16. Les plaques sont insérées entre deux dents consécutives par leur queue 3, et l'extrémité élargie 13 permet la retenue des plaques et leur soudure sur le pied de borne. Des séparateurs 17 isolent les unes des autres les plaques alternées positives 12 et négatives 18.

Cet élargissement 13 permet également un autre procédé d'assemblage représenté figures 7A et 7B. Ici, les plaques positives 12 et négatives 18 sont juxtaposées avec leurs séparateurs isolants 17, puis on comprime fortement ensemble tous les élargissements 13 des plaques de même polarité. On aboutit ainsi à une connexion respectivement 19, 20 par simple compression des élargissements 13 entre eux formant une adhésion mutuelle par effet "velcro". Il s'agit d'un accrochage mécanique des fibres libres de nickel.

S'il n'y a pas d'élargissement 13 à l'extrémité des queues 3 de plaque d'électrode, comme représenté figure 1D, l'assemblage des queues de connexion sur une borne se fait de manière habituelle par soudure, vissage à travers un trou avec l'utilisation d'une rondelle, etc...

Les figures 3A à 3E représentent les étapes d'une variante du procédé par rapport aux étapes représentées figures 1A à 1D.

Le but de cette variante est d'obtenir une plaque d'électrode 12 dans laquelle la portion transitoire 11 de la queue 3 est également chargée de matière active de façon à rigidifier cette zone de transition. En effet, l'empâtage de cette zone a pour effet de bloquer le mouvement des fibres de nickel et ainsi de rigidifier la tête de plaque dans cette zone.

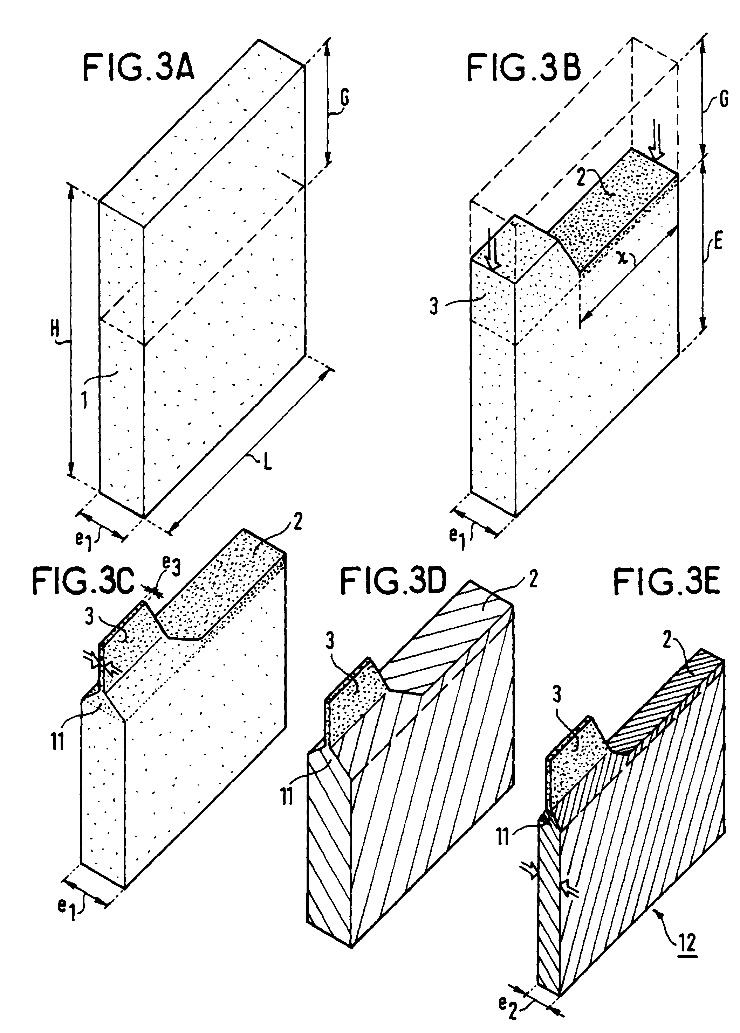

Ainsi, dans ce procédé, pour lequel on part également d'une plaque de mousse métallique telle que du nickel de longueur L, hauteur H et épaisseur e₁ (figure 3A), on commence, non pas comme précédemment, à empâter la plaque sur une hauteur E, mais on effectue d'abord, figure 3B, la compression de la bande initiale de hauteur G dans la direction de la hauteur, comme sur la figure 1C et de la même façon. Ensuite, figure 3C, on effectue la compression dans le sens de l'épaisseur de la seule queue 3 de façon à obtenir l'épaisseur finale e₃ comme sur la figure 1D. On obtient ainsi, et comme dans le procédé précédent une portion transitoire 11, mais ici, cette portion transitoire 11 qui aboutit comme précédemment à l'épaisseur e₃ finale de la queue 3 part de l'épaisseur initiale e₁ du support de plaque 1. Ensuite, figure 3D, on effectue maintenant seulement l'empâtage du support 1 avec la matière active, ce qui permet à celle-ci de pénétrer également dans les porosités de la zone transitoire 11. Enfin, figure 3E, on effectue la compression générale de la plaque de façon à obtenir l'épaisseur e₂ comme précédemment. On aboutit ainsi à l'électrode finale 12 de la figure 3E qui ne diffère de celle représentée figure 1D que par le fait que la zone de transition 11 est empâtée, alors qu'elle ne l'est pas dans la plaque 12 de la figure 1D.

Les figures 4A et 4B montrent une petite variante qui s'applique aussi bien au procédé représenté sur les figures 1A à 1D, où l'empâtage est fait dès le début, qu'au procédé représenté sur les figures 3A à 3E, où l'empâtage n'est effectué qu'après la confection de la queue 3 à son épaisseur finale e₃.

Dans cette variante, la compression, figure 4A, dans le sens de la hauteur H de la bande de hauteur initiale G du support de plaque 1, correspondant aux étapes des figures précédentes 1C ou 3B, est une compression partielle uniforme sur toute la longueur L du support de plaque. Cette compression partielle correspond à celle qui a été effectuée, dans ces figures précédentes, dans la partie correspondant à la queue 3. On aboutit ainsi à une zone en forme de bande uniforme 21, de densité, par unité de surface, environ trois fois le reste de la plaque. Ensuite, on effectue la compression dans le sens de l'épaisseur, soit de cette seule bande 21 pour l'amener à l'épaisseur finale e₃ si l'empâtage n'a pas été effectué préalablement et l'on conserve alors, pour le moment, l'épaisseur e₁ (en pointillés 22 sur la figure 4B), soit on effectue également la compression de l'ensemble de la plaque pour l'amener à l'épaisseur finale e₂ si l'empâtage a été effectué préalablement.

Lorsque la plaque est terminée, après empâtage et compression de l'ensemble à l'épaisseur e₂ si cela n'avait pas été fait avant, on découpe la portion 23 en pointillé de la figure 4B de façon à ne laisser subsister que la queue de connexion 3.

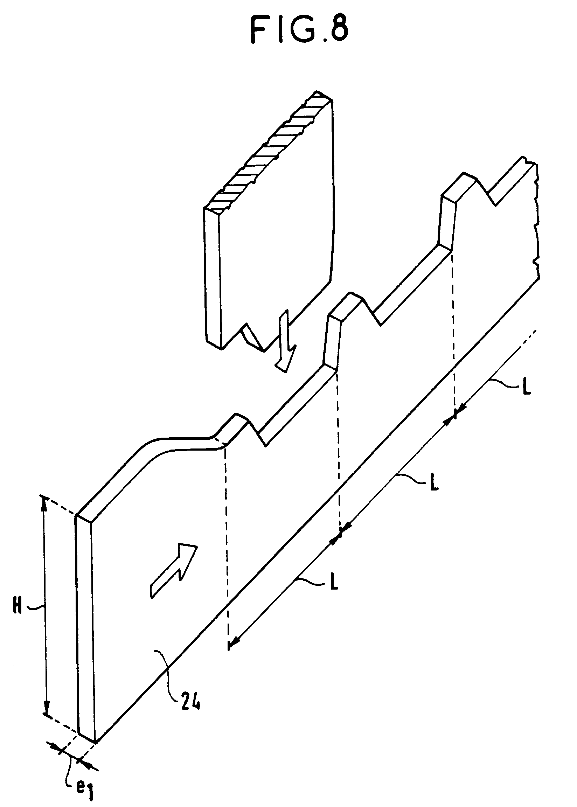

Ainsi qu'il a été dit plus haut, on peut, bien entendu, et dans tous les cas de variantes décrits, effectuer la fabrication d'une pluralité de plaques d'électrodes de longueur L en partant d'un ruban (24) de support de mousse métallique d'épaisseur e₁ et de hauteur H, en effectuant toutes les opérations du procédé, puis à la fin, en découpant les longueurs L correspondant à chaque plaque. C'est ce qui a été figuré sur la figure 8.

## Revendications

1. Plaque d'électrode (12) à support (1) de type mousse métallique pour générateur électrochimique, comportant une partie active (E) empâtée de matière active et une tête de plaque (2, 3, 11) comportant une queue de connexion (3), caractérisée en ce que ladite tête de plaque est constituée par la mousse métallique elle-même dudit support, sans adjonction de bandes de mousse métallique supplémentaires, ni de pièces supplémentaires, la densité, par unité de surface de la mousse métallique dans ladite tête de plaque étant au moins 2,5 fois celle du reste de la plaque d'électrode, la densité supérieure de la tête de plaque provenant d'une opération de compression de la mousse du support, ladite queue (3) de ladite tête de plaque émergeant du milieu de l'épaisseur (e₂) de ladite plaque et provenant d'une compression dudit support dans deux directions, une première compression dans le plan de l'électrode dans le sens de sa hauteur et une deuxième compression perpendiculaire au plan de l'électrode dans le sens de son épaisseur.

2. Plaque d'électrode selon la revendication 1, caractérisée en ce que la partie (2) de la tête de plaque, en dehors de ladite queue de connexion (3), a une porosité le plus proche possible de 0% provenant d'un écrasement maximal de la mousse de départ du support (1) dans le sens de la hauteur de l'électrode.

3. Plaque d'électrode selon l'une des revendications 1 ou 2, caractérisée en ce que l'extrémité supérieure libre de ladite queue de connexion (3) comporte un élargissement (13) en épaisseur par rapport au reste de ladite queue.

4. Procédé pour la réalisation d'une plaque d'électrode selon l'une des revendications 1 à 3, caractérisé par le fait que l'on part d'une plaque dudit support ayant une longueur L, une hauteur H et une épaisseur e₁, puis :
a - on charge ledit support de matière active depuis le bas jusqu'à une hauteur H-G;
b - on comprime la partie non chargée, constituant une bande de hauteur initiale G, dans la direction de la hauteur, c'est-à-dire dans le plan du support;
- on comprime la totalité du support dans la direction de son épaisseur e₁, cette compression étant incomplète dans la partie chargée de matière active pour l'amener à une épaisseur e₂ et maximale dans au moins la majeure partie de la hauteur restante de ladite bande, à partir de la partie chargée, avec néanmoins une portion transitoire (11) entre ladite partie chargée (E), incomplètement comprimée, et ladite compression maximale d'au moins la majeure partie de la hauteur restante de ladite bande.

5. Procédé pour la réalisation d'une plaque d'électrode selon l'une des revendications 1 à 3, caractérisé par le fait que l'on part d'une plaque dudit support ayant une longueur L, une hauteur H et une épaisseur e, puis :
a - on comprime dans la direction de la hauteur, c'est-à-dire dans le plan du support, une bande de hauteur initiale G dudit support,
b - on comprime, dans la direction de son épaisseur, et au maximum, au moins la majeure partie de la hauteur restante de la bande comprimée sous l'opération précédente a, à partir de la partie non comprimée et avec une portion transitoire (11) entre ladite partie non comprimée et ladite compression maximale de la majeure partie de la hauteur de ladite bande,
c - on charge ledit support de matière active dans toute sa partie non comprimée ainsi que dans ladite portion transitoire,
d - on comprime partiellement toute la partie du support chargée de matière active sous l'opération c.

6. Procédé selon l'une des revendications 4 ou 5, caractérisé par le fait que ladite compression, dans la direction de la hauteur de ladite bande de hauteur initiale G, (opération effectuée sous 1b ou 2a), est maximale sur une partie x de la longueur L du support et partielle sur la partie restante L-x, cette partie restante formant une queue (3) constituant ladite queue de connexion.

7. Procédé selon l'une des revendications 4 ou 5, caractérisé par le fait que ladite compression, dans la direction de la hauteur de ladite bande de hauteur initiale G (opération effectuée sous 1b ou 2a), est une compression partielle uniforme (figure 4A) sur toute la longueur L du support.

8. Procédé selon la revendication 7, caractérisé par le fait que l'on découpe une portion (23) de ladite partie non chargée de matière active de façon à ne laisser qu'une languette constituant ladite queue de connexion (3).

9. Procédé selon l'une des revendications 4 à 8, caractérisé par le fait que ladite compression maximale dans le sens de l'épaisseur du support initial (opération effectuée sous 1c ou 2b), est faite de part et d'autre dudit support (1).

10. Procédé selon l'une des revendications 4 à 9, caractérisé en ce que ladite opération de compression dans le sens de l'épaisseur, et d'une façon maximale, d'au moins la majeure partie de ladite bande laisse une petite hauteur de cette dite bande, du côté de son extrémité libre, incomplètement comprimée de façon à former un élargissement.

11. Procédé pour l'assemblage de plusieurs plaques d'électrodes de même polarité (12, 13), réalisées selon le procédé de la revendication 10, caractérisé par le fait que l'on utilise un pied de borne à dents (14, 15), chaque plaque d'électrode (12, 13) étant insérée par sa partie de ladite bande complètement comprimée, entre deux dents consécutives (16), ledit élargissement (13) assurant la retenue des plaques d'électrode.

12. Procédé pour l'assemblage de plusieurs plaques d'électrodes de même polarité réalisées selon le procédé de la revendication 10, caractérisé par le fait que l'on comprime au maximum les uns contre les autres lesdits élargissements (13) desdites plaques.

13. Procédé pour la fabrication d'une pluralité de plaques d'électrodes selon l'une des revendications 1 à 3, caractérisé en ce qu'au départ on utilise un ruban (24) de mousse de métal de longueur indéfinie, de hauteur H et d'épaisseur initiale e₁, et que l'on effectue sur chaque longueur L consécutive de ce ruban, et en continu, les opérations effectuées selon l'une des revendications 4 à 10, et qu'ensuite on découpe le ruban pour obtenir les plaques à leur longueur L.

## Patentansprüche

1. Elektrodenplatte (12) mit einem Träger (1) aus Metallschaum für einen elektrochemischen Generator, wobei die Platte einen aktiven Bereich (E), der mit aktivem Material bestrichen ist, und einen Plattenkopf (2, 3, 11) mit einer Verbindungsfahne (3) enthält, dadurch gekennzeichnet, daß der Plattenkopf aus dem Metallschaum des Trägers selbst ohne Hinzufügung von zusätzlichen Metallschaumbändern oder Zusatzteilen gebildet wird, daß die Dichte des Metallschaums im Plattenkopf je Flächeneinheit mindestens 2,5 mal so groß wie die der übrigen Elektrodenplatte ist, wobei die größere Dichte des Plattenkopfes von einer Kompression des Trägerschaums herrührt und die Fahne (3) des Plattenkopfes in der Mitte der Dicke (e₂) der Platte vorsteht und von einer Kompression des Trägers in beiden Richtungen herrührt, nämlich einer ersten Kompression in der Ebene der Elektrode und in Richtung ihrer Höhe und einer zweiten, zur Ebene der Elektrode senkrechten Kompression in Richtung der Dicke.

2. Elektrodenplatte nach Anspruch 1, dadurch gekennzeichnet, daß der Teil (2) des Plattenkopfes außerhalb der Verbindungsfahne (3) eine Porosität besitzt, die möglichst nahe bei 0% liegt und von einer maximalen Kompression des ursprünglichen Trägerschaums (1) in Richtung der Höhe der Elektrode herrührt.

3. Elektrodenplatte nach einem der Ansprüche 1 oder 2, dadurch gekennzeichnet, daß das obere freie Ende der Verbindungsfahne (3) eine Erweiterung (13) in Dickenrichtung bezüglich der übrigen Fahne besitzt.

4. Verfahren zur Herstellung einer Elektrodenplatte nach einem der Ansprüche 1 bis 3, dadurch gekennzeichnet, daß man von einer Trägerplatte mit einer Länge L, einer Höhe H und einer Dicke e₁ ausgeht, um dann
a) den Träger von unten bis zu einer Höhe H-G mit aktivem Material zu bestreichen,
b) den nicht bestrichenen Bereich, der einen Streifen einer ursprünglichen Höhe G bildet, in Richtung der Höhe, d.h. in der Ebene des Trägers, zu komprimieren,
c) den gesamten Träger in Richtung seiner Dicke e₁ zu komprimieren, wobei diese Kompression in dem mit aktivem Material bestrichenen Bereich unvollkommen ist und nur zu einer Dicke e₂ führt, während sie größtmöglich in mindestens dem größten Teil der verbleibenden Höhe des Streifens ausgehend von dem mit aktivem Material bestrichenen Bereich ist, wobei jedoch ein unvollkommen komprimierter Übergangsbereich (11) zwischen dem mit aktivem Material bestrichenen Bereich (E) und der maximalen Kompression mindestens des größten Teils der verbleibenden Höhe des Streifens verbleibt.

5. Verfahren zur Herstellung einer Elektrodenplatte nach einem der Ansprüche 1 bis 3, dadurch gekennzeichnet, daß man von einer Trägerplatte mit einer Länge L, einer Höhe H und einer Dicke e₁ ausgeht und dann
a) einen Streifen einer ursprünglichen Höhe G des Trägers in Richtung der Höhe, d.h. in der Ebene des Trägers komprimiert,
b) in Richtung der Dicke mindestens den größten Teil der verbleibenden Höhe des in der vorhergehenden Operation komprimierten Streifens ausgehend von dem nicht komprimierten Bereich maximal komprimiert, wobei ein Übergangsbereich (11) zwischen dem unkomprimierten und dem maximal komprimierten Bereich des größten Teils der Höhe des Streifens entsteht,
c) den Träger mit aktivem Material in dem ganzen nicht komprimierten Bereich sowie in dem Übergangsbereich bestreicht,
d) den Bereich des Trägers, der mit aktivem Material bei der Operation (c) bestrichen wurde, komprimiert.

6. Verfahren nach einem der Ansprüche 4 oder 5, dadurch gekennzeichnet, daß die Kompression in der Richtung der Höhe des Streifens mit ursprünglicher Höhe G über einen Bereich x der Länge L des Trägers maximal, aber über den restlichen Bereich L-x nur partiell erfolgt, wobei dieser verbleibende Bereich die Verbindungsfahne (3) bildet.

7. Verfahren nach einem der Ansprüche 4 oder 5, dadurch gekennzeichnet, daß die Kompression in Richtung der Höhe des Streifens mit der ursprünglichen Höhe G eine gleichmäßige partielle Kompression (Figur 4A) über die ganze Länge L des Trägers ist.

8. Verfahren nach Anspruch 7, dadurch gekennzeichnet, daß ein Teil (23) des nicht mit aktivem Material bestrichenen Bereichs ausgeschnitten wird, so daß nur eine Zunge übrigbleibt, die die Verbindungsfahne (3) bildet.

9. Verfahren nach einem der Ansprüche 4 bis 8, dadurch gekennzeichnet, daß die maximale Kompression in Richtung der Dicke des ursprünglichen Trägers von beiden Seiten des Trägers (1) erfolgt.

10. Verfahren nach einem der Ansprüche 4 bis 9, dadurch gekennzeichnet, daß die maximale Kompression in der Richtung der Dicke mindestens eines überwiegenden Teils des Streifens eine geringe Höhe dieses Bandes auf der Seite des freien Endes übrigläßt, die unvollkommen komprimiert wird, so daß sich eine Erweiterung ergibt.

11. Verfahren zum Zusammenbau mehrerer Elektrodenplatten gleicher Polarität (12, 13), die nach dem Verfahren gemäß Anspruch 10 hergestellt wurden, dadurch gekennzeichnet, daß man eine Klemaenfuß mit Zähnen (14, 15) verwendet und jede Elektrodenplatte (12, 13) mit ihrem unvollkommen komprimierten Streifenbereich zwischen zwei aufeinanderfolgende Zähne (16) eingefügt wird, wobei die Erweiterung (13) die Elektrodenplatten hält.

12. Verfahren zum Zusammenbau mehrerer Elektrodenplatten gleicher Polarität, die nach dem Verfahren gemäß Anspruch 10 hergestellt wurden, dadurch gekennzeichnet, daß man die Erweiterungen (13) der Platten maximal gegeneinanderpreßt.

13. Verfahren zur Herstellung einer Mehrzahl von Elektrodenplatten nach einem der Ansprüche 1 bis 3, dadurch gekennzeichnet, daß man anfangs ein Band (24) aus Metallschaum einer unbestimnten Länge und einer Höhe H sowie einer ursprünglichen Dicke e₁ verwendet und daß man an jeder aufeinanderfolgenden Länge L dieses Bandes und kontinuierlich die Operationen gemäß einem der Ansprüche 4 bis 10 durchführt und schließlich das Band zerschneidet, um die Platten mit einer Länge L zu erhalten.

## Claims

1. An electrode plate (12) for an electrochemical cell and having a metal foam type support (1), the plate comprising an active portion (E) pasted with active material and a plate head (2, 3, 11) that includes a connection tab (3), the plate being characterized in that said plate head is constituted by the same metal foam as said support, without adding any additional parts or additional strips of metal foam, the density per unit area of the metal foam in said plate head being at least 2.5 times its density in the remainder of the electrode, the greater density of the plate head coming from an operation in which the foam of the support is compressed, said tab (3) and said plate emerging from the middle of the thickness (e₂) of said plate and being the result of compressing said support in two directions: a first compression in the plane of the electrode and in the height direction thereof; and a second compression perpendicular to the plane of the electrode and in the thickness direction thereof.

2. An electrode plate according to claim 1, characterized in that the portion (2) of the plate head that lies outside said connection tab (3) has porosity that is as close as possible to 0% as achieved by maximum crushing of the initial foam of the support (1) in the height direction of the electrode.

3. An electrode plate according to claim 1 or 2, characterized in that the free top end of said connection tab (3) includes a portion (13) of thickness greater than the remainder of said tab.

4. A method of making an electrode plate according to any one of claims 1 to 3, characterized by the fact that starting from a plate of said support of length L, of height H, and of thickness e₁, the following steps are performed:
a - said support is filled with active material from the bottom up to a height of H-G;
b - the non-filled portion, constituting a strip initially of height G is compressed in the height direction, i.e. in the plane of the support; and
c - the entire support is compressed in the direction of its thickness e₁, said compression being incomplete in the portion thereof that is filled with active material so as to give rise to a thickness e₂, and being maximal in at least the major portion of the remaining height of said strip, running from the filled portion, while nevertheless leaving a transitional portion (11) between said incompletely compressed filled portion (E), and said maximal compression of at least the major fraction of the remaining height of said strip.

5. A method of making an electrode plate according to any one of claims 1 to 3, characterized by the fact that starting from a plate of said support of length L, of height H, and of thickness e₁, the following steps are performed:
a - a strip of said support of initial height G is compressed in the height direction, i.e. in the plane of the support;
b - at least the major fraction of the remaining height of said strip as compressed in above operation a is maximally compressed in its thickness direction, running from the non-compressed portion and leaving a transitional portion (11) between said non-compressed portion and said maximal compression of the major fraction of the height of said strip;
c - the entire non-compressed portion of said support together with said transitional portion thereof is filled with active material; and
d - the entire portion of the support that is filled with active material in operation c is compressed in part.

6. A method according to claim 4 or 5, characterized by the fact that said compression in the height direction of said strip of initial height G (the operation performed in step 4b or 5a) is maximal over a fraction x of the length L of the support and partial over the remaining portion forming a tab (3) constituting said connection tab.

7. A method according to claim 4 or 5, characterized by the fact that said compression in the height direction of said strip of initial height G (operation performed in step 4b or 5a) is uniform partial compression (Figure 4A) over the entire length L of the support.

8. A method according to claim 7, characterized by the fact that a fraction (23) of said portion that has not been filled with active material is cut off so as to leave only a tongue that constitutes said connection tab (3).

9. A method according to any one of claims 4 to 8, characterized by the fact that said maximal compression in the thickness direction of the initial support (operation performed in step 4c or 5b) is performed from both sides of said support (1).

10. A method according to any one of claims 4 to 9, characterized by the fact that said operation of compressing at least a major portion of said strip to a maximal extent in the thickness direction leaves an incompletely compressed small fraction of the height of said strip adjacent to its free end, thereby leaving an enlarged portion.

11. A method of assembling together a plurality of same-polarity electrode plates (12, 13) made according to the method of claim 10, characterized by the fact that a comb terminal strip (14, 15) is used, with each electrode plate being inserted via its fully compressed portion of said strip between two consecutive comb teeth (16), said enlarged portion (13) serving to retain the electrode plates.

12. A method of assembling together a plurality of same-polarity electrode plates made according to the method of claim 10, characterized by the fact that said enlarged portions (13) of said plates are maximally compressed against one another.

13. A method of manufacturing a plurality of electrode plates according to any one of claims 1 to 3, characterized in that the starting material is a tape (24) of metal foam of indefinite length, of height H, and of initial thickness e₁, with the operations defined according to any one of claims 4 to 10 being performed continuously on each consecutive length L of said tape, after which the tape is cut up to obtain said plates of length L.
